# NEUE EUROPÄISCHE PATENTSCHRIFT

(11) **EP 3 528 608 B2**
(45) Veröffentlichungstag und Bekanntmachung des Hinweises auf die Entscheidung über den Einspruch: **10.01.2024**
(45) Hinweis auf die Patenterteilung: 02.06.2021
(21) Anmeldenummer: 17780765.8
(22) Anmeldetag: 11.10.2017
(51) Int. Cl.: G05D 1/02, A01B 79/00

(54) **PLANUNG UND AUSFÜHRUNG LANDWIRTSCHAFTLICHER MASSNAHMEN**
PLANNING AND IMPLEMENTING AGRICULTURAL MEASURES
PRÉPARER ET EXÉCUTER DES MESURES AGRICOLES

(30) Priorität: 18.10.2016 EP 16194375
(43) Veröffentlichungstag der Anmeldung: 28.08.2019
(73) Patentinhaber: BASF Agro Trademarks GmbH, 67056 Ludwigshafen am Rhein (DE)
(72) Erfinder: PETERS, Ole, 40217 Düsseldorf (DE); HOFFMANN, Holger, 42781 Haan (DE); ZHAO, Gang, 40764 Langenfeld (DE); DAS, Subhashree, 40764 Langenfeld (DE)
(74) Vertreter: Maiwald GmbH
(86) Internationale Anmeldenummer: PCT/EP2017/075894
(87) Internationale Veröffentlichungsnummer: WO 2018/073060

(56) Entgegenhaltungen:
- WO-A1-96/02817
- DE-A1-102011 120 858
- US-A1- 2001 036 295
- US-A1- 2003 187 560
- US-A1- 2004 034 450
- US-A1- 2012 195 496

## Beschreibung

Die vorliegende Erfindung betrifft die Planung und Ausführung von landwirtschaftlichen Maßnahmen anhand von Fernerkundungsdaten und lokalen Felddaten.

Unter dem Stichwort Präzisionslandwirtschaft (engl.: *precision farming*) wird eine ortsdifferenzierte und zielgerichtete Bewirtschaftung landwirtschaftlicher Nutzflächen verstanden. Ziel ist es, die Unterschiede des Bodens und der Ertragsfähigkeit innerhalb eines Feldes zu berücksichtigen.

Dies sei am Beispiel der Applikation von Pflanzenschutzmitteln erläutert.

Pflanzenschutzmittel werden weltweit eingesetzt, um Pflanzen oder Pflanzenerzeugnisse vor Schadorganismen zu schützen oder deren Einwirkung vorzubeugen, unerwünschte Pflanzen oder Pflanzenteile zu vernichten, ein unerwünschtes Wachstum von Pflanzen zu hemmen oder einem solchen Wachstum vorzubeugen, und/oder in einer anderen Weise die Lebensvorgänge von Pflanzen zu beeinflussen (z.B. Wachstumsregler).

Pflanzenschutzmittel können in einigen Ländern Anwendungseinschränkungen unterliegen, zum Beispiel dürfen einige Pflanzenschutzmittel nur zu bestimmten Zeiten, an bestimmten Orten, zu einem bestimmten Zweck und/oder in einer bestimmten Menge eingesetzt werden.

Ein Problem beim Pflanzenschutz ist zudem die Gefahr von Resistenzbildungen bei Insekten, Unkräutern und Pilzen gegenüber einzelnen Wirkstoffen.

Demnach sollten Pflanzenschutzmittel nur bei Bedarf und nur in den Mengen eingesetzt werden, die jeweils nötig sind.

Den jeweiligen Bedarf an Pflanzenschutzmitteln zu bestimmen, gestaltet sich jedoch als schwierig.

Die exakte Dosierung eines Pflanzenschutzmittels richtet sich nach dem biophysikalischen Zustand der Vegetation zum exakten Zeitpunkt der Anwendung des Pflanzenschutzmittels. Prinzipiell müsste man damit den Bedarf unmittelbar vor einer Applikation eines Pflanzenschutzmittels ermitteln.

Der biophysikalische Zustand der Vegetation ist zudem innerhalb eines Schlages nicht einheitlich. Es können unterschiedliche Wachstumsstadien vorliegen, die einer angepassten Dosierung bedürfen.

Ähnliches gilt für den Einsatz von Nährstoffen für die angebauten Kulturpflanzen. Auch der Nähstoffbedarf der Pflanzen kann lokal unterschiedlich sein. Zum einen kann es ein, dass die Bodenverhältnisse räumlich variieren und einige Bereiche über weniger Nährstoffe verfügen als andere. Zum anderen kann es sein, dass in einigen Bereichen die angebauten Kulturpflanzen unterentwickelt sind (z.B. infolge von lokalen Witterungsschäden) und es sich aus wirtschaftlichen Gründen nicht lohnt, in diese Bereiche weiter zu investieren, weswegen der Einsatz von Nährstoffen hier unrentabel ist.

Auch bei der Aussaat einer Kulturpflanze sollten Unterschiede im Feld in Bezug auf z.B. Boden oder Witterungsverhältnisse berücksichtigt werden, um einen maximalen Ertrag zu erzielen. Es ist zum Beispiel denkbar, dass in einigen Bereichen des Feldes eine dichtere Bepflanzung günstiger ist, während in anderen Bereichen des Feldes die Pflanzen weniger dicht gepflanzt werden sollten. Ebenso ist es denkbar, die anzubauende Kulturpflanze oder Sorte auf Basis der jeweils vorliegenden Bodeneigenschaften auszuwählen.

Es besteht damit ein Bedarf, Inhomogenitäten im Feld erkennen zu können, die einen Einfluss auf den späteren Ertrag ausüben können und/oder die eine entsprechend angepasste Behandlung des Feldes erfordern, um unter minimalem Ressourceneinsatz nachhaltig einen maximalen Ertrag zu erzielen.

Satellitenaufnahmen können Informationen über den biophysikalischen Zustand eines Feldes liefern; mit Hilfe solcher Aufnahme können zudem Inhomogenitäten in einem Feld erkannt werden (siehe z.B. M. S. Moran et al.: Opportunities and Limitations for Image-Based Remote Sensing in Precision Crop Management, Remote Sensing of Environment (1997) 61: 319-346).

Allerdings sind Satellitenaufnahmen in der Regel nicht tagesaktuell verfügbar; zum einen werden manche Gegenden nicht täglich von Satellitenaufnahmen erfasst, zum anderen können beispielsweise Wolken die Erzeugung nutzbarer Fernerkundungsdaten erschweren oder gar verhindern.

Ferner erreichen viele Satellitenaufnahmen nicht die nötige räumliche Auflösung, um den lokalen, im Feld vorliegenden Inhomogenitäten gerecht zu werden.

Mit Hilfe lokaler Sensoren im Feld kann der aktuelle lokale Zustand des Feldes bestimmt werden. Allerdings ist die Reichweite lokaler Sensoren begrenzt. Teilweise werden Maschinen zur landwirtschaftlichen Bearbeitung eines Feldes mit Sensoren ausgestattet, die den Zustand des Feldes ermitteln, während sich die Maschinen durch das Feld bewegen (siehe z.B. WO2015193822 oder DE 102010034603). Auf diese Weise wird die Reichweite der Sensoren erhöht. Die Daten werden also während der Bewirtschaftung erzeugt und können direkt in die Bewirtschaftung einfließen. Nachteilig daran ist aber, dass eine Planung einer landwirtschaftlichen Maßnahme für das gesamte Feld allein auf der Basis der spontan erzeugten Daten nicht möglich ist, da immer nur ein Teil des Feldes von den Sensoren erfasst wird

Die Druckschrift DE 10 2011 120858 A1 zeigt ein Verfahren zum Planen einer landwirtschaftlichen Maßnahme unter Zuhilfenahme von digital aufgenommenen Bildern.

Es besteht damit die Aufgabe, die teilflächenspezifische Bewirtschaftung landwirtschaftlicher Felder weiter zu optimieren.

Diese Aufgabe wird durch die Gegenstände der unabhängigen Ansprüche 1 und 13 gelöst. Bevorzugte Ausführungsformen finden sich in den abhängigen Ansprüchen und in der vorliegenden Beschreibung.

Die Erfindung wird nachstehend näher erläutert, ohne zwischen den Erfindungsgegenständen (Verfahren, System) zu unterscheiden. Die nachfolgenden Erläuterungen sollen vielmehr für alle Erfindungsgegenstände in analoger Weise gelten, unabhängig davon, in welchem Kontext (Verfahren, System) sie erfolgen.

Sind bei der Beschreibung des erfindungsgemäßen Verfahrens Schritte in einer Reihenfolge aufgeführt, so bedeutet dies nicht zwangsläufig, dass die Schritte auch in der angegebenen Reihenfolge ausgeführt werden müssen. Die Erfindung soll vielmehr so verstanden werden, dass die in einer Reihenfolge aufgeführten Schritte in einer beliebigen Reihenfolge oder auch parallel zueinander ausgeführt werden können, es sei denn, ein Schritt basiert auf einem anderen Schritt, was aus der Beschreibung der Schritte jeweils deutlich werden sollte. Die konkret in diesem Dokument aufgeführte Reihenfolge stellt demnach nur eine bevorzugte Ausführungsform der Erfindung dar.

In einem ersten Schritt des erfindungsgemäßen Verfahrens wird mindestens eine digitale Bildaufnahme von einem Feld für Kulturpflanzen empfangen, wobei die mindestens eine digitale Bildaufnahme mit Hilfe eines oder mehrerer Fernerkundungssensoren erzeugt worden ist.

Unter dem Begriff "Kulturpflanze" wird eine Pflanze verstanden, die durch das Eingreifen der Menschen zielgerichtet als Nutz- oder Zierpflanze angebaut wird.

Unter dem Begriff "Feld" wird ein räumlich abgrenzbarer Bereich der Erdoberfläche verstanden, der landwirtschaftlich genutzt wird, indem auf einem solchen Feld Kulturpflanzen angepflanzt, mit Nährstoffen versorgt und geerntet werden. In einem Feld kann eine einzelne Sorte einer Kulturpflanze angebaut werden; es können aber auch verschiedene Sorten einer Kulturpflanze und/oder verschiedene Kulturpflanzen angebaut werden. Es ist auch denkbar, dass ein Feld einen Bereich oder mehrere Bereiche umfasst, in dem/denen keine Kulturpflanzen angebaut sind und/oder angebaut werden.

Unter dem Begriff "Bildaufnahme" wird eine zweidimensionale Abbildung des Feldes oder eines Bereichs eines Feldes verstanden.

Der Begriff "digital" bedeutet, dass die Bildaufnahme von einer Maschine, in der Regel einem Computersystem, verarbeitet werden kann. Unter "Verarbeitung" werden die bekannten Verfahren zur elektronischen Datenverarbeitung (EDV) verstanden.

Die mindestens eine digitale Bildaufnahme wurde mit Hilfe eines oder mehrerer Fernerkundungssensoren erzeugt. Es handelt sich bei der digitalen Bildaufnahme somit um Fernerkundungsdaten.

"Fernerkundungsdaten" sind digitale Informationen, die aus der Ferne beispielsweise durch Satelliten von der Erdoberfläche gewonnen wurden. Auch der Einsatz von Luftfahrzeugen (unbemannt (Drohnen) oder bemannt) zur Aufnahme von Fernerkundungsdaten ist denkbar.

Durch die Fernerkundungssensoren werden digitale Abbildungen von Bereichen der Erdoberfläche erzeugt, aus denen Informationen über die dort herrschende Vegetation und/oder die dort herrschenden Umweltbedingungen gewonnen werden können (siehe z.B. M. S. Moran et al.: Opportunities and Limitations for Image-Based Remote Sensing in Precision Crop Management, Remote Sensing of Environment (1997) 61: 319-346).

Die Daten dieser Sensoren werden über die vom Anbieter zur Verfügung gestellten Schnittstellen bezogen und können optische und elektromagnetische (z.B. Synthetic Aperture Radar SAR) Datensätze verschiedener Verarbeitungsstufen umfassen.

Die digitale Bildaufnahme kann in ein Computersystem eingelesen und auf einem Bildschirm, der an das Computersystem angeschlossen ist, angezeigt werden. Ein Nutzer des Computersystems erkennt in der Abbildung auf dem Bildschirm das aufgenommene Feld oder Teile des aufgenommenen Feldes wieder. Bei der "digitalen Bildaufnahme" handelt es sich somit um eine digitale Repräsentation des Feldes.

Die mindestens eine digitale Bildaufnahme wird üblicherweise mit Hilfe eines Computersystems, das an ein Computernetzwerk angeschlossen ist, empfangen. Dabei gelangt eine digitale Bildaufnahme von einem entfernten Computersystem auf ein Computersystem, das von einem Nutzer zur Ausübung der vorliegenden Erfindung verwendet wird (das hier so genannte erste Computersystem).

Die digitale Bildaufnahme enthält Informationen über das Feld und/oder die dort angebauten Kulturpflanzen, die zur Planung der landwirtschaftlichen Maßnahme verwendet werden können (siehe z.B. M. S. Moran et al.: Opportunities and Limitations for Image-Based Remote Sensing in Precision Crop Management, Remote Sensing of Environment (1997) 61: 319-346).

Die digitale Bildaufnahme des Feldes kann beispielsweise den Vegetationszustand der im Feld angebauten Kulturpflanzen zum Zeitpunkt, an dem die Aufnahme erstellt worden ist, anzeigen.

Der Vegetationszustand der Kulturpflanzen kann aus den digitalen Bildaufnahmen beispielsweise durch Berechnung eines Vegetationsindexes bestimmt werden. Ein bekannter Vegetationsindex ist beispielsweise der normalisierte differenzierte Vegetationsindex (NDVI, engl. Normalized Differenced Vegetation Index oder auch Normalized Density Vegetation Index). Der NDVI wird aus den Reflexionswerten im nahen Infrarotbereich und des roten sichtbaren Bereichs des Lichtspektrums berechnet. Der Index beruht auf der Tatsache, dass gesunde Vegetation im roten Bereich des sichtbaren Spektralbereichs (Wellenlänge von etwa 600 bis 700 nm) relativ wenig und im angrenzenden Nahinfrarot-Bereich (Wellenlänge von etwa 700 bis 1300 nm) relativ viel Strahlung reflektiert. Dabei sind die Unterschiede im Reflexionsverhalten auf unterschiedliche Entwicklungszustände der Vegetation zurückzuführen. Dementsprechend ist der Index umso höher je weiter das Wachstum einer Pflanze fortgeschritten ist.

Für jedes Pixel einer digitalen Bildaufnahme eines Feldes (beispielsweise einer Satellitenaufnahme des Feldes) lässt sich ein NDVI berechnen. Aus dem NDVI lässt sich die Menge an vorhandener Biomasse ableiten.

Als weiterer möglicher Vegetationsindex kann auch der gewichtete differenzierte Vegetationsindex (WDVI, engl. Weighted Difference Vegetation Index) aus den Fernerkundungsdaten ermittelt werden (siehe z.B. US2016/0171680A1).

Aus der digitalen Bildaufnahme lässt sich ferner ein Blattflächenindex (LAI, engl. Leaf Area Index) ermitteln (siehe z.B.: A. Viña, A.A. Gitelson, A.L. Nguy-Robertson and Y. Peng (2011): Comparison of different vegetation indices for the remote assessment of green leaf area index of crops. In: Remote Sensing of Environment, Vol. 115, p. 3468-3478, https://msu.edu/~vina/2011_RSE_GLAl.pdf).

Für jedes Pixel einer digitalen Bildaufnahme eines Feldes (beispielsweise einer Satellitenaufnahme des Feldes) lässt sich ein WDVI und/oder ein Blattflächenindex berechnen.

Weitere Parameter, die aus einer digitalen Bildaufnahme eines Feldes ermittelt werden können und die Informationen über den biophysikalischen Zustand des Feldes liefern, sind beispielsweise in den nachfolgenden Veröffentlichungen beschrieben:
M.D. Steven and J.A. Clark (1990): Applications of Remote Sensing in Agriculture. University Press, Cambridge/UK, http://www.sciencedirect.com/science/book/ 9780408047678; A. Bannari, D. Morin, F. Bonn and A.R. Huete (2009): A review ofvegetation indices. In: Remote Sensing Reviews, Vol. 13, Issue 1-2, p. 95-120, http://www.tandfonline.com/doi/abs/10.1080/02757259509532298; A.A. Gitelson (2004): Wide dynamic range vegetation index for remote sensing quantification of biophysical characteristics of vegetation. In: Journal of Plant Physiology, Vol. 161, Issue 2, p.165-173.

Ferner kann eine digitale Bildaufnahme eines Feldes einen Befall der im Feld angebauten Kulturpflanzen mit einem Schadorganismus anzeigen (siehe z.B. Jingcheng Zhang et al.: Using satellite multispectral imagery for damage mapping of armyworm (Spodoptera frugiperda) in maize at a regional scale, Pest Management Science, Volume 72, Issue 2, February 2016, Pages 335-348; Z.-G. Zhou et al.: Detecting Anomaly Regions in Satellite Image Time Series Based On Seasonal Autocorrelation Analysis, ISPRS Annals of the Photogrammetry, Remote Sensing and Spatial Information Sciences, Volume III-3, 2016 XXIII ISPRS Congress, 12-19 July 2016, Prague, Czech Republic, Pages 303 - 310).

Ferner kann eine digitale Bildaufnahme eines Feldes Defizite bei den vorhandenen Nährstoffen anzeigen (siehe z.B. Neil C. Sims et al.: Towards the Operational Use of Satellite Hyperspectral image Data for Mapping Nutrient Status and Fertilizer Requirements in Australian Plantation Forests, IEEE Journal of Selected Topics in Applied Earth Observations and Remote Sensing 6(2), April 2013, 320-328; P.C. Scharf,: Remote sensing for nitrogen management, Journal of Soil and Water Conservation, 2002, Vol. 57, No. 6, 518-524).

Ferner kann eine digitale Bildaufnahme eines Feldes Informationen über Eigenschaften des Bodens liefern (Said Nawar et al.: Digital Mapping of Soil Properties Using Multivariate Statistical Analysis and ASTER Data in an Arid Region, Remote Sens. 2015, 7, 1181-1205; doi:10.3390/rs70201181; Ertugrul Aksoy et al.: Soil mapping approach in GIS using Landsat satellite imagery and DEM data, African Journal of Agricultural Research Vol. 4 (11), pp. 1295-1302, November, 2009; Hendrik Wulf et al.: Remote Sensing of Soils, 22. Jan. 2015, Doc. Ref: 00.0338.PZ / L435-0501, http://www.geo.uzh.ch/fileadmin/files/content/abteilungen/rsl1/Remote_sensing_of_soils_BAFU_report_dpi300_v.pdf) .

In einem weiteren Schritt des erfindungsgemäßen Verfahrens wird die digitale Bildaufnahme des Feldes dazu verwendet, eine landwirtschaftliche Maßnahme zu planen.

Unter dem Begriff "landwirtschaftliche Maßnahme" wird jede Maßnahme in dem Feld für Kulturpflanzen verstanden, die nötig oder wirtschaftlich und/oder ökologisch sinnvoll ist, um ein pflanzliches Erzeugnis zu gewinnen. Beispiele für landwirtschaftliche Maßnahmen sind: Bodenbearbeitung (z.B. Pflügen), Ausbringen des Saatguts (Aussaat), Bewässerung, Entfernen von Unkräutern/Ungräsern, Düngen, Bekämpfen von Schadorganismen, Ernten.

Bei vielen landwirtschaftlichen Maßnahmen erfolgt die Applikation von biologischen und/oder chemischen Mitteln mit Hilfe einer Applikationsvorrichtung. Beispiele für diese Mittel sind Pflanzenschutzmittel und Nährstoffe.

Unter dem Begriff "Pflanzenschutzmittel" wird ein Mittel verstanden, das dazu dient, Pflanzen oder Pflanzenerzeugnisse vor Schadorganismen zu schützen oder deren Einwirkung vorzubeugen, unerwünschte Pflanzen oder Pflanzenteile zu vernichten, ein unerwünschtes Wachstum von Pflanzen zu hemmen oder einem solchen Wachstum vorzubeugen, und/oder in einer anderen Weise als Nährstoffe die Lebensvorgänge von Pflanzen zu beeinflussen (z.B. Wachstumsregler).

Beispiele für Pflanzenschutzmittel sind Herbizide, Fungizide und Pestizide (z.B. Insektizide).

Ein Pflanzenschutzmittel enthält üblicherweise einen Wirkstoff oder mehrere Wirkstoffe. Als "Wirkstoffe" werden Substanzen bezeichnet, die in einem Organismus eine spezifische Wirkung haben und eine spezifische Reaktion hervorrufen. Üblicherweise enthält ein Pflanzenschutzmittel einen Trägerstoff zum Verdünnen des einen oder der mehreren Wirkstoffe. Daneben sind Additive wie Konservierungsmittel, Puffer, Farbstoffe und dergleichen denkbar. Ein Pflanzenschutzmittel kann fest, flüssig oder gasförmig vorliegen.

Wachstumsregler dienen zum Beispiel der Erhöhung der Standfestigkeit bei Getreide durch Verkürzung der Halmlänge (Halmverkürzer oder besser Internodienverkürzer), Verbesserung der Bewurzelung von Stecklingen, Verringerung der Pflanzenhöhe durch Stauchung im Gartenbau oder der Verhinderung der Keimung von Kartoffeln. Es sind üblicherweise Phytohormone oder deren synthetischen Analoge.

Unter dem Begriff "Nährstoffe" werden diejenigen anorganischen und organischen Verbindungen verstanden, denen Pflanzen die Elemente entnehmen können, aus denen ihre Körper aufgebaut sind. Als Nährstoffe werden oft auch diese Elemente selbst bezeichnet. Je nach dem Standort der Pflanze werden die Nährstoffe aus der Luft, dem Wasser und dem Boden entnommen. Dabei handelt es sich meistens um einfache anorganische Verbindungen wie Wasser (H₂O) und Kohlendioxid (CO₂) sowie Ionen wie Nitrat (NO₃⁻), Phosphat (PO₄³⁻) und Kalium (K⁺). Die Verfügbarkeit der Nährstoffe ist unterschiedlich. Sie hängt vom chemischen Verhalten des Nährstoffs und von den Standortbedingungen ab. Da die Nährstoff-Elemente in einem bestimmten Mengenverhältnis benötigt werden, begrenzt meist die Verfügbarkeit eines Elementes das Wachstum der Pflanzen. Führt man dieses Element zu, steigert sich das Wachstum. Lebensnotwendig sind neben den Kernelementen der organischen Substanz (C, O, H, N und P) noch K, S, Ca, Mg, Mo, Cu, Zn, Fe, B, Mn, Cl bei höheren Pflanzen, Co, Ni. Stickstoff kann beispielsweise als Nitrat, Ammonium oder Aminosäure zugeführt werden. Teilweise ist Na⁺ als Funktionsersatz für K⁺ einsetzbar.

Unter einer "Applikationsvorrichtung" wird eine maschinelle Vorrichtung zum Applizieren eines oder mehrerer Pflanzenschutzmittel und/oder Nährstoffe auf einem Feld verstanden. Eine solche Applikationsvorrichtung umfasst in der Regel mindestens einen Behälter zur Aufnahme mindestens eines Pflanzenschutzmittels und/oder Nährstoffs, eine Sprühvorrichtung, mit der das Pflanzenschutzmittel und/oder der Nährstoff auf dem Feld abgegeben wird und eine Steuereinrichtung, mit der die Förderung des mindestens einen Pflanzenschutzmittels und/oder Nährstoffs aus seinem Behälter in Richtung Sprühvorrichtung gesteuert wird. Ferner weist die Applikationsvorrichtung Mittel zur Bewegung im und/oder über das Feld aus. Vorzugsweise ist die Applikationsvorrichtung mit einem GPS-Sensor oder einem vergleichbaren Sensor ausgestattet, so dass die jeweilige Position der Applikationsvorrichtung bei ihrer Bewegung im und/oder über dem Feld bestimmt werden kann.

Die Planung der landwirtschaftlichen Maßnahme erfolgt teilflächenspezifisch. Das bedeutet, dass für das Feld keine einheitliche Maßnahme festgelegt wird, sondern dass lokalen Unterschieden im Feld Rechnung getragen wird, indem für einzelne Teilflächen jeweils eine spezifische bedarfsgerechte Ausführung der Maßnahme geplant wird.

Es ist zum Beispiel denkbar, dass in dem Feld Kulturpflanzen angebaut sind, die einen unterschiedlichen Bedarf an einem oder mehreren Pflanzenschutzmitteln und/oder Nährstoffen haben. Eineteilflächenspezifische Maßnahme berücksichtigt diesen unterschiedlichen Bedarf. In einem solchen Fall wird also geplant, das Feld mit einem oder mehreren Pflanzenschutzmitteln und/oder Nährstoffen zu behandeln, wobei die Mengen an einzusetzenden Pflanzenschutzmitteln und/oder Nährstoffen an die unterschiedlichen Bedürfnisse der Kulturpflanzen in verschiedenen Bereichen des Feldes angepasst werden.

Ein Schritt bei der Planung einer teilflächenspezifischen Applikation eines oder mehrerer Pflanzenschutzmittel ist üblicherweise die Ermittlung eines Bedarfs.

Es ist zum Beispiel denkbar, dass ein Bedarf an einer Versorgung der Pflanzen mit einem oder mehreren Nährstoffen besteht.

Ferner ist denkbar, dass ein Bedarf an der Applikation eines oder mehrere Pflanzenschutzmitteln besteht.

Ferner ist denkbar, dass der Zeitpunkt für die Aussaat einer oder mehrerer Kulturpflanzen günstig ist, und damit ein Bedarf an der Aussaat der einen oder der mehreren Kulturpflanzen besteht.

Ferner ist denkbar, dass Bedarf an einer Bewässerung des Feldes besteht.

Ferner ist denkbar, dass Bedarf an einer mechanischen Bearbeitung des Bodens besteht.

Der ermittelte Bedarf hat üblicherweise eine Ursache, so dass die Ermittlung eines Bedarfs im Rahmen dieser Erfindung gleichbedeutend mit der Ermittlung einer Ursache für einen Bedarf sein kann.

Der Bedarf an einer Behandlung eines Feldes und/oder von Kulturpflanzen mit einem oder mehreren Pflanzenschutzmitteln kann z.B. daher rühren, dass ein Schädlingsbefall aufgetreten ist oder aufzutreten droht. Es ist beispielsweise denkbar, dass vor dem Ausbringen der Saat einer Kulturpflanze die im Feld befindlichen Unkräuter und/oder Ungräser entfernt werden müssen. Es ist auch denkbar, dass sich nach der Aussaat Unkräuter und/oder Ungräser im Feld entwickelt haben, die entfernt werden müssen. Es ist auch denkbar, dass ein Teil der angebauten Kulturpflanzen oder alle Kulturpflanzen mit einem Krankheitserreger oder einem Pilz befallen ist/sind. Es ist auch denkbar, dass sich ein tierischer Schädling in dem Feld ausgebreitet hat. Denkbar ist auch, dass die Ausbreitung eines Schädlingsbefalls droht.

Unter einem "Schadorganismus" wird ein Organismus verstanden, der beim Anbau von Kulturpflanzen in Erscheinung treten und die Kulturpflanze schädigen, die Ernte der Kulturpflanze negativ beeinflussen oder mit der Kulturpflanze um natürliche Ressourcen konkurrieren kann. Beispiele für derartige Schadorganismen sind Unkräuter, Ungräser, tierische Schädlinge wie beispielsweise Käfer, Raupen und Würmer, Pilze und Krankheitserreger (z.B. Bakterien und Viren). Auch wenn Viren aus biologischer Sicht nicht zu den Organismen zählen, sollen sie dennoch vorliegend unter den Begriff Schadorganismus fallen.

Unter dem Begriff "Unkraut" (Mehrzahl: Unkräuter) werden Pflanzen der spontanen Begleitvegetation in Kulturpflanzenbeständen, Grünland oder Gartenanlagen verstanden, die dort nicht gezielt angebaut werden und z.B. aus dem Samenpotential des Bodens oder über Zuflug zur Entwicklung kommen. Der Begriff ist nicht auf Kräuter im eigentlichen Sinne beschränkt, sondern umfasst auch Gräser, Farne, Moose oder holzige Pflanzen.

Im Bereich des Pflanzenschutzes wird häufig auch der Begriff "Ungras" (Mehrzahl: Ungräser) benutzt, um eine Abgrenzung zu den krautigen Pflanzen zu verdeutlichen. Im vorliegenden Text wird der Begriff Unkraut als Oberbegriff verwendet, der Ungras mit erfassen soll, es sei denn, es wird auf spezifische Unkräuter oder Ungräser Bezug genommen.

Ungräser und Unkräuter im Sinne der vorliegenden Erfindung sind demnach Pflanzen, die beim Anbau einer gewünschten Kulturpflanze als Begleitung auftreten. Da sie mit der Kulturpflanze um Ressourcen konkurrieren, sind sie unerwünscht und sollen daher bekämpft werden.

Die Ermittlung eines Bedarfs erfolgt vorzugsweise durch Einsatz von Sensoren im und/oder über dem Feld, welche die Anwesenheit eines Schadorganismus im Feld registrieren und/oder welche das Vorliegen von Umweltbedingungen, die für die Ausbreitung eines Schadorganismus günstig sind, registrieren.

Auch der Einsatz von Fallen, die an verschiedenen Stellen des Felds aufgestellt sind, kann einen Befall mit Schadorganismen erkennbar machen.

Es ist auch denkbar, für die Ermittlung eines Bedarfs Prognosemodelle z.B. zur Vorhersage eines Schädlingsbefalls einzusetzen. Solche Prognosemodelle sind im Stand der Technik ausgiebig beschrieben und auch kommerziell verfügbar. Das Entscheidungsunterstützungssystem proPlant Expert verwendet zur Prognose Daten zur angebauten Kultur (Entwicklungsstadium, Wachstumsbedingungen, Pflanzenschutzmaßnahmen), zur Witterung (Temperatur, Sonnenscheindauer, Windgeschwindigkeit, Niederschlag) sowie zu den bekannten Schädlingen / Krankheiten (ökonomische Grenzwerte, Schädlings-/Krankheitsdruck) und berechnet auf Basis dieser Daten ein Befallsrisiko (Newe M., Meier H., Johnen A., Volk T.: proPlant expert.com - an online consultation system on crop protection in cereals, rape, potatoes and sugarbeet. EPPO Bulletin 2003, 33, 443-449; Johnen A., Williams I.H., Nilsson C., Klukowski Z., LuikA., Ulber B.: The proPlant Decision Support System: Phenological Models for the Major Pests of Oilseed Rape and Their Key Parasitoids in Europe, Biocontrol-Based Integrated Management of Oilseed Rape Pests (2010) Ed.: Ingrid H. Williams. Tartu 51014, Estonia. IS-BN 978-90-481-3982-8. p. 381 - 403; www.proPlantexpert.com).

Auch der Befall eines Nachbarfelds mit einem Schadorganismus, der beispielsweise von einem Landwirt gemeldet wird, kann einen Bedarf anzeigen.

In analoger Weise kann der Bedarf der angebauten Kulturpflanzen an Nährstoffen beispielsweise mittels lokaler Sensoren und/oder Fernerkundungssensoren und/oder Inaugenscheinnahme und/oder Vorhersagemodellen (z.B. Pflanzenwachstumsmodelle) ermittelt werden.

In analoger Weise kann der Bedarf an der Ausbringungen der Saat der anzubauenden Kulturpflanze beispielsweise mittels lokaler Sensoren und/oder Fernerkundungssensoren und/oder Inaugenscheinnahme und/oder Vorhersagemodellen (z.B. Pflanzenwachstumsmodelle/Wettervorhersage) ermittelt werden.

In einer Ausführungsform wird der Bedarf an einer landwirtschaftlichen Maßnahme aus der digitalen Bildaufnahme, die in einem ersten Schritt empfangen worden ist, abgeleitet.

In einer Ausführungsform wird der Bedarf an einer landwirtschaftlichen Maßnahme auf Basis eines Vorhersagemodells berechnet.

In einer Ausführungsform wird der Bedarf an einer landwirtschaftlichen Maßnahme mittels eines oder mehrerer Sensoren im und/oder über dem Feld registriert.

Es ist auch denkbar, dass ein Nutzer festlegt, dass eine landwirtschaftliche Maßnahme ausgeführt werden soll. In einer solchen Ausführungsform wird der Bedarf an einer landwirtschaftlichen Maßnahme von einem Nutzer festgelegt.

Ein weiterer Schritt zur Planung der teilflächenspezifischen landwirtschaftlichen Maßnahme kann die Auswahl der Mittel, die den ermittelten Bedarf befriedigen, sein.

Ist beispielsweise ein Bedarf an der Ausbringung eines Nährstoffes ermittelt worden, könnte ein Produkt ausgewählt werden, dass den Nährstoff umfasst.

Ist beispielsweise ein Bedarf an der Ausbringung eines Herbizids zur Bekämpfung von Unkräutern und/oder Ungräsern ermittelt worden, könnte ein Produkt ausgewählt, das die Unkräuter und/oder Ungräser bekämpft.

Ist beispielsweise ein Bedarf an der Ausbringung eines Insektizids ermittelt worden, könnte ein Produkt ausgewählt werden, das die ursächlichen Schadinsekten bekämpft.

Ist beispielsweise ein Bedarf an der Ausbringung eines Fungizids ermittelt worden, könnte ein Produkt ausgewählt werden, das den ursächlichen Pilzbefall bekämpft.

Unter dem Begriff "Bekämpfung" werden eine Verhinderung des Befalls eines Feldes oder einem Teil davon mit einem oder mehreren Schadorganismen und/oder eine Verhinderung der Ausbreitung von einem oder mehreren Schadorganismen und/oder eine Reduzierung der Menge an vorhandenen Schadorganismen verstanden.

Ein weiterer Schritt zur Planung der teilflächenspezifischen landwirtschaftlichen Maßnahme kann die Ermittlung der erforderlichen Menge an Saatgut, Pflanzenschutzmittel, Nährstoffen und/oder Wasser zur Befriedigung des Bedarfs (Bedarfsmenge) sein.

Die Ermittlung der Menge erfolgt vorzugsweise teilflächenspezifisch. Das bedeutet, dass für einzelne Teilflächen des Feldes die jeweilige Bedarfsmenge ermittelt wird.

Die Bedarfsmenge wird dabei vorzugsweise auf Basis der mindestens einen digitalen Bildaufnahme ermittelt.

Die Bedarfsmenge kann beispielsweise von der Menge an vorliegender Biomasse abhängig sein. Dies kann beispielsweise bei der Bekämpfung von Unkräutern und/oder Ungräsern der Fall sein: je größer die Menge an vorliegenden Unkräutern/Ungräsern ist, desto mehr Herbizid muss zur Bekämpfung eingesetzt werden.

Auch die Bedarfsmenge bei der Versorgung der Pflanzen mit Nährstoffen kann von der Menge an vorhandener Biomasse abhängig sein: je weiter eine Pflanze in ihrer Entwicklung fortgeschritten ist, desto größer kann der Bedarf an der Versorgung mit Nährstoffen sein.

Die Bedarfsmenge kann aber auch von der Größe der Blattfläche abhängig sein. Dies kann beispielsweise bei der prophylaktischen Behandlung der Kulturpflanze mit einem Pflanzenschutzmittel der Fall sein, wenn der Befall mit einem Krankheitserreger oder Pilz droht, der vornehmlich die Blätter befällt.

Die Bedarfsmenge kann aber auch abhängig von der Menge an Pflanzen sein, die von einem Schadorganismus befallen ist.

Die Bedarfsmenge kann aber auch abhängig von der Größe des Bereichs in dem Feld sein, in dem ein Befall mit einem Schadorganismus droht.

Zur Ermittlung der teilflächenspezifischen Bedarfsmenge wird vorzugsweise für jedes Pixel der digitalen Bildaufnahme die jeweilige Bedarfsmenge ermittelt.

Es ist auch denkbar, benachbarte Pixel der digitalen Bildaufnahme zusammenzufassen (Clustering) und die teilflächenspezifische Bedarfsmenge für die Cluster aus zusammengefassten Pixeln zu bestimmen.

Ein weiterer Schritt zur Planung der teilflächenspezifischen landwirtschaftlichen Maßnahme kann die Ermittlung weiterer Mittel zur Befriedigung des Bedarfs sein. Weitere Mittel können zum Beispiel eine oder mehrere Applikationsvorrichtungen, Arbeitsmaschinen, Personal und dergleichen sein.

Ein weiterer Schritt zur Planung der teilflächenspezifischen landwirtschaftlichen Maßnahme kann die Ermittlung und/oder Festlegung eines geeigneten Zeitraums für die Ausführung der Maßnahme sein. Kulturpflanzen werden beispielsweise nicht im nassen Zustand geerntet, da sonst beispielsweise die Gefahr einer Bildung von Schimmelpilzen besteht, welche das Erntegut schädigen könnten. Insofern wäre es vorteilhaft, einen Zeitraum für die Ernte zu wählen, vor dem es ein paar Tage nicht geregnet hat und in dem es nicht regnen wird. Wettervorhersagen können verwendet werden, um geeignete Tage zu identifizieren.

Ein weiterer Schritt zur Planung der teilflächenspezifischen landwirtschaftlichen Maßnahme kann die Ermittlung und/oder Festlegung einer geeigneten und/oder optimalen Route für die jeweilige Arbeitsmaschine (z.B. eine Applikationsmaschine) zur Ausführung der Maßnahme sein.

Aus der mindestens einen digitalen Bildaufnahme lassen sich weitere Informationen gewinnen, die zur Planung der landwirtschaftlichen Maßnahme verwendet werden können.

Beispielsweise lässt sich die Bedarfsmenge für das gesamte Feld (Bedarfsgesamtmenge) an Pflanzenschutzmittel, Nährstoffen, Wasser und/oder Saatgut ermitteln. Die Bedarfsgesamtmenge ergibt sich beispielsweise durch Addition der teilflächenspezifischen Bedarfsmengen aller Teilflächen. Das Wissen über die Bedarfsgesamtmenge ist wichtig, da die entsprechende Menge bereitgestellt werden muss. Ferner können bei Kenntnis der Bedarfsgesamtmenge die Kosten für die Ausführung der landwirtschaftlichen Maßnahme abgeschätzt werden, die maßgeblich durch die Kosten der bereitzustellenden Mittel bestimmt werden können.

Ferner lässt sich eine Variationsbreite der teilspezifischen Bedarfsmengen aus der mindestens einen digitalen Bildaufnahme ermitteln. Üblicherweise weisen verschiedene Teilflächen Unterschiede in der jeweiligen Bedarfsmenge auf. Die Variationsbreite gibt an, wie groß diese Unterschiede sind. Üblicherweise gibt es eine Teilfläche, für die die Bedarfsmenge pro Flächeneinheit am größten ist, und eine Teilfläche, für die die Bedarfsmenge pro Flächeneinheit am kleinsten ist. Der Unterschied zwischen maximaler und minimaler Bedarfsmenge pro Flächeneinheit stellt die Variationsbreite dar.

Im Folgenden werden einige weitere Bespiele genannt, wie Informationen aus der mindestens einen digitalen Bildaufnahme des Feldes für die Planung einer landwirtschaftlichen Maßnahme verwendet werden können.

Es ist zum Beispiel denkbar, dass die digitale Bildaufnahme zeigt, dass ein Bereich des Feldes mit einem Schadorganismus befallen ist, während andere Bereiche (noch) nicht betroffen sind. In einem solchen Fall kann ein schnelles Eingreifen erforderlich sein, um eine weitere Ausbreitung des Schadorganismus zu verhindern. Dementsprechend kann die Planung so aussehen, dass der befallene Bereich schnellstmöglich mit einem Schädlingsbekämpfungsmittel behandelt werden soll. Unmittelbare an den befallenen Bereich angrenzende Bereiche werden vorzugsweise ebenfalls in die Behandlung einbezogen, während nicht betroffene, fernab liegende Bereiche nicht behandelt werden müssen.

Ebenso ist es denkbar, dass Bereiche mit Kulturpflanzen in dem Feld vorliegen, die gegenüber anderen Bereichen in ihrer Entwicklung weit zurück liegen. In einem solchen Fall kann es sein, dass die weit zurückgebliebenen Bereiche aus wirtschaftlichen Gründen nicht weiter verfolgt, d.h. nicht mit einem Pflanzenschutzmittel und/oder Nährstoffen behandelt werden sollten, da der Kostenaufwand aufgrund der geringen Ertragserwartung nicht gerechtfertigt ist.

Die digitale Bildaufnahme kann ferner beispielsweise dazu verwendet werden, die Route der mindestens einen Applikationsvorrichtung durch und/oder über das Feld festzulegen. Sind Bereiche identifiziert worden, bei denen kein Bedarf an der Behandlung mit einem Pflanzenschutzmittel und/oder einem Nährstoff besteht, brauchen diese Bereiche auch nicht von der Applikationsvorrichtung angefahren/angeflogen zu werden.

Ferner kann es erforderlich sein, den Behälter der mindestens einen Applikationsvorrichtung während ihres Einsatzes einmal oder mehrfach mit Pflanzenschutzmittel und/oder Nährstoffen aufzufüllen. Anhand der teilflächenspezifischen Bedarfsmengen lässt sich berechnen, welche Mengen an Pflanzenschutzmittel und/oder Nährstoffen auf einer Route oder Teilroute verbraucht werden und es lässt sich die optimale Route berechnen, bei der die Applikationsvorrichtung den kürzesten Weg zurücklegt, um alle erforderlichen Positionen im Feld anzufahren/anzufliegen und zwischendurch Pflanzenschutzmittel und/oder Nährstoffe nachzufüllen.

Die digitale Bildaufnahme kann aber auch verwendet werden, um eine optimale Route für die Behandlung mit Pflanzenschutzmittel zu bestimmen, bei der das Risiko einer Kontamination minimal ist. Es ist beispielsweise denkbar, dass in einem Feld Nester mit Schädlingen (z.B. Pilze oder Krankheitserreger) auftreten, während andere Bereiche (noch) nicht befallen sind. Um die Schädlinge nicht ausversehen bei der Bewegung der Applikationsvorrichtung durch das Feld von den Nestern in andere, bisher nicht betroffene Bereiche zu tragen, kann auf der digitalen Bildaufnahme eine optimale Route bestimmt werden, bei der die Nester zum Schluss angefahren werden und die Applikationsvorrichtung auf ihrem Weg von den Nestern heraus aus dem Feld den kürzesten Weg nimmt.

Die digitale Bildaufnahme kann jedoch auch verwendet werden, um eine Applikationskarte zu erzeugen, die dann beispielsweise während des Applikationsprozesses durch lokale Daten im Feld aktualisiert und/oder verfeinert wird.

Eine Applikationskarte ist eine Repräsentation des Feldes oder eines Teils des Feldes, in dem eine Applikation mit einem oder mehreren Pflanzenschutzmittels und/oder Nährstoffen erfolgen soll. In der Applikationskarte ist angegeben, aufweichen Teilflächen des Feldes, welche Mengen eines oder mehrerer ausgewählter Pflanzenschutzmittel und/oder Nährstoffe appliziert werden sollen, um beispielsweise die Ausbreitung von Schadorganismen zu verhindern und/oder Schadorganismen zu bekämpfen und/oder, um für eine optimale Versorgung der Kulturpflanzen mit Nährstoffen zu sorgen. Vorzugsweise handelt es sich um eine digitale Applikationskarte, die in eine Steuereinheit der Applikationsvorrichtung eingelesen werden kann. Bewegt sich die Applikationsvorrichtung im und/oder über dem Feld, so kann mittels eines GPS-Sensors oder eines vergleichbaren Sensors die Position der Applikationsvorrichtung bestimmt werden. Durch einen Vergleich der realen Position mit der entsprechenden Position in der digitalen Applikationskarte kann die jeweilige Bedarfsmenge an der realen Position an einem oder mehreren Pflanzenschutzmitteln und/oder Nährstoffen ermittelt werden.

In einem weiteren Schritt des erfindungsgemäßen Verfahrens wird die geplante landwirtschaftliche Maßnahme ausgeführt. Während der Ausführung der Maßnahme werden ein oder mehrere Sensoren (Feldsensor(en)) eingesetzt, die einen oder mehrere lokale Parameter im Feld erfassen. Die erfassten lokalen Parameter fließen dann in die Ausführung der landwirtschaftlichen Maßnahme ein, indem die Ausführung an die lokalen Bedürfnisse im Feld angepasst wird.

Mit dem mindestens einen Feldsensor wird in dem Feld lokal mindestens ein Parameter ermittelt, der für die Ausführung der landwirtschaftlichen Maßnahme zu berücksichtigen ist, um eine bedarfsgerechte Behandlung zu gewährleisten.

Unter "lokal" wird verstanden, dass der entsprechende Sensor einen Bereich in der Umgebung einer Vorrichtung zur Ausführung der landwirtschaftlichen Maßnahme (z.B. eine Applikationsvorrichtung) erfasst, der vorzugsweise eine Größe von 1 cm² bis 1000 m², noch mehr bevorzugt von 10 cm² bis 100 m² aufweist. Unter "Umgebung" wird vorzugsweise derjenige Bereich verstanden, der sich in Bewegungsrichtung der Vorrichtung zur Ausführung der landwirtschaftlichen Maßnahme vor der Vorrichtung befindet und vom Sensor erfasst wird. Die Vorrichtung bewegt sich demnach auf die "Umgebung" zu, um dort eine oder mehrere landwirtschaftliche Maßnahmen auszuführen. Der Erfassungsbereich ist von der Art des verwendeten Sensors abhängig und kann den vom jeweiligen Hersteller veröffentlichten Produktangaben entnommen werden.

Umfasst die landwirtschaftliche Maßnahme beispielsweise die Applikation eines Pflanzenschutzmittels, und sollte aus wirtschaftlichen und/oder ökologischen Gründen und/oder aufgrund von gesetzlichen Bestimmungen und/oder aufgrund eines effizienteren und/oder effektiveren Einsatzes des Pflanzenschutzmittels beispielsweise die Menge des applizierten Pflanzenschutzmittels an die Blattfläche oder an die Menge an vorhandener Biomasse oder an die Menge an vorhandener Biomasse einer bestimmten Art und/oder Sorte angepasst werden, so handelt es sich bei dem mindestens einen Parameter vorzugsweise um einen, der Aufschluss über die Blattfläche oder die Menge an vorhandene Biomasse oder die Menge an vorhandener Biomasse der bestimmten Menge und/oder Sorte gibt.

Umfasst die landwirtschaftliche Maßnahme beispielsweise die Applikation eines Pflanzenschutzmittels zur Bekämpfung eines Schadorganismus und sollte nur an den Stellen eine Applikation erfolgen, an denen der Schadorganismus nachweisbar ist, sollte der mindestens eine Parameter Aufschluss über das Vorhandensein des Schadorganismus geben.

Umfasst die landwirtschaftliche Maßnahme das Ausbringen eines Nährstoffes oder die Ernte der Kulturpflanzen und sollte aus wirtschaftlichen Gründen ein Nährstoff nur dort ausgebracht werden oder die Ernte nur dort erfolgen, wo die angebauten Kulturpflanzen eine Wachstumsschwelle überschritten haben, so sollte der mindestens eine Parameter Aufschluss darüber geben, an welchen Stellen im Feld die Wachstumsschwelle erreicht oder sogar über- und an welchen Stellen sie unterschritten worden ist.

Feldsensoren zur Ermittlung lokaler Paramater im Feld sind in vielfältiger Form kommerziell verfügbar (siehe z.B. https://www.decagon.com/en/canopy/canopy-measurements/spectralreflectance-sensor-srs/; http://plantstress.com/methods/Greenseeker.PDF; http://dx.doi.org/10.1155/2012/582028; N. Srivastava et al.: Pest Monitor and Control System using Wireless Sensor Network (with Special Reference to Acoustic Device Wireless Sensor); International Conference on Electrical and Electronics Engineering 27th Jan 2013, Goa, ISBN: 978-93-82208-58-7, pages 40-46; Lucia Quebrajo et al.: An Approach to Precise Nitrogen Management Using Hand-Held Crop Sensor Measurements and Winter Wheat Yield Mapping in a Mediterranean Environment, Sensors 2015, 15, 5504-5517, doi:10.3390/s150305504).

Bei dem mindestens einen Parameter, der von dem mindestens einen Feldsensor erfasst wird, kann es sich um den gleichen Parameter handeln, der zur Planung der landwirtschaftlichen Maßnahme aus der digitalen Bildaufnahme verwendet wird.

Denkbar ist aber auch, dass für die Ermittlung der lokalen Bedürfnisse im Feld mittels des mindestens einen Feldsensors ein anderer Parameter verwendet wird als für die Planung der landwirtschaftlichen Maßnahme auf Basis der digitalen Bildaufnahme des Feldes. Beispiele für Kombinationen von Parametern sind weiter unten im Text angeführt.

Erfindungsgemäß bewegt sich der mindestens eine Feldsensor unabhängig von der mindestens einen Applikationsvorrichtung durch das Feld und/oder über dem Feld. Denkbar ist beispielsweise der Einsatz einer Drohne, die vor dem Einsatz der mindestens einen Applikationsvorrichtung die aktuellen lokalen Bedarfsmengen im Feld ermittelt.

Der mindestens eine Feldsensor steht in einer Kommunikationsverbindung zu einem Computersystem, mit dem auf Basis der Signale, die vom Feldsensor geliefert werden, der aktuelle lokale Bedarf ermittelt werden kann (das hier so genannte zweite Computersystem).

Dieses zweite Computersystem kann so hergerichtet sein, dass es die mindestens eine Applikationsvorrichtung, die sich im und/oder über das Feld bewegt, ansteuert, so dass die jeweils ermittelten aktuellen lokalen Bedarfsmengen entsprechend appliziert werden.

Es ist aber auch denkbar, dass das zweite Computersystem so hergerichtet ist, dass es auf Basis der ermittelten lokalen Bedarfsmengen eine digitale Applikationskarte erzeugt, die in einen Arbeitsspeicher der Applikationsvorrichtung eingelesen werden kann, so dass die Applikationsvorrichtung die jeweiligen lokalen Bedarfsmengen appliziert, wenn sie sich an der entsprechenden Position im und/oder über dem Feld befindet.

Es ist aber auch denkbar, dass auf Basis der aus den Fernerkundungsdaten ermittelten teilflächenspezifischen Bedarfsmengen eine erste Applikationskarte erzeugt worden ist, die mit Hilfe des zweiten Computersystems anhand der ermittelten lokalen Bedarfsmengen aktualisiert und/oder verfeinert wird.

Wie oben beschrieben, kann aus den Fernerkundungsdaten eine teilflächenspezifische Applikationskarte erzeugt werden, die aufgrund der Teilflächenspezifizität lokalen Bedürfnissen in gewisser Weise Rechnung trägt. Die Applikationskarte, die aus den Fernerkundungsdaten generiert worden ist, ist jedoch aufgrund der vergleichsweise geringen Auflösung der Fernerkundungsdaten ungenau und/oder nicht aktuell. Erfindungsgemäß wird dieses Defizit dadurch behoben, dass ein oder mehrere Sensoren im und/oder über dem Feld (Feldsensoren) eingesetzt werden, um beispielsweise die aktuelle lokale Bedarfsmenge an einem oder mehreren Pflanzenschutzmitteln und/oder Nährstoffen zu bestimmen. Während also der digitalen Bildaufnahme, die mittels eines oder mehrerer Fernerkundungssensoren aus der Ferne erzeugt worden ist, beispielsweise eine Bedarfsgesamtmenge, eine Bedarfsmengenvariabilität und ungefähre lokale Bedarfsmengen für ein Feld entnommen werden können, werden durch den mindestens einen Feldsensor die wirklichen aktuellen lokalen Bedarfsmengen ermittelt.

Gemäß einer nicht beanspruchten Ausführungsform, die hilfreich ist zum Verständnis der Erfindung bewegt sich der mindestens eine Feldsensor zusammen mit der Applikationsvorrichtung im und/oder über dem Feld. Er erfasst daher nur die unmittelbare Umgebung der Applikationsvorrichtung, so dass beispielsweise die Bedarfsgesamtmenge mit Hilfe dieses Feldsensors wenn überhaupt erst dann ermittelt werden kann, wenn die Applikationsvorrichtung das gesamte Feld abgefahren/abgeflogen und der Feldsensor nach und nach das gesamte Feld erfasst hat. Insofern ergänzen sich der mindestens eine Fernerkundungssensor und der mindestens eine Feldsensor in idealer Weise: der Fernerkundungssensor dient der Ermittlung einer Übersicht über die Zustände im gesamten Feld, wobei die Übersicht zur Planung eines Einsatzes einer Applikationsvorrichtung verwendet wird, während der Feldsensor die aktuelle lokale Bedarfsmenge feststellt.

Vorteilhafterweise ist die mindestens eine digitale Bildaufnahme zu einem Zeitpunkt erstellt worden, der nahe an dem Zeitpunkt liegt, für den die landwirtschaftliche Maßnahme geplant wird. Je dichter der Zeitpunkt der Bildaufnahme und der Zeitpunkt der landwirtschaftlichen Maßnahme beieinander liegen, umso genauer ist die Planung. Vorzugsweise liegen zwischen dem Zeitpunkt der Bildaufnahme und dem Zeitpunkt der landwirtschaftlichen Maßnahme nicht mehr als ein Monat, besonders bevorzugt nicht mehr als eine Woche, am meisten bevorzugt nicht mehr als 5 Tage.

Liegen der Zeitpunkt der Bildaufnahme und der Zeitpunkt der landwirtschaftlichen Maßnahme so weit auseinander, dass eine sinnvolle Planung nicht mehr möglich ist, z.B. weil sich in der Zwischenzeit die Zustände im Feld soweit verändert haben, dass die geplanten Mittel und Mengen nicht mehr zur Befriedigung der Bedürfnisse ausreichen, können Vorhersagemodelle verwendet werden, um den aktuellen Zustand zu berechnen. In einem solchen Fall wird also eine frühere digitale Bildaufnahme empfangen und einem Vorhersagemodell zugeführt, das dann vorzugsweise für den Zeitpunkt (bzw. Zeitraum) der geplanten landwirtschaftlichen Maßnahme die Zustände im Feld berechnet. Die Planung erfolgt dann nicht direkt auf Basis der digitalen Bildaufnahme sondern auf Basis von Daten, die einer digitalen Bildaufnahme zum Vorhersagezeitpunkt entsprechen.

Insbesondere das Wachstumsstadium der angebauten Kulturpflanzen kann sich schnell ändern. Ist für eine bedarfsgerechte landwirtschaftliche Maßnahme das Wachstumsstadium der angebauten Kulturpflanzen maßgeblich, z.B. weil bei der Maßnahme ein Mittel in einer Menge appliziert werden soll, die von der Blattfläche oder der Menge an vorliegender Biomasse abhängt, kann beispielsweise ein Pflanzenwachstumsmodell verwendetwerden, um das Wachstumsstadium für den Zeitpunkt der geplanten landwirtschaftlichen Maßnahme auf Basis der früheren digitalen Bildaufnahme des Feldes vorherzusagen.

Unter dem Begriff "Pflanzenwachstumsmodell" wird ein mathematisches Modell verstanden, das das Wachstum einer Pflanze in Abhängigkeit von intrinsischen (Genetik) und extrinsischen (Umwelt) Faktoren beschreibt.

Pflanzenwachstumsmodelle existieren für eine Vielzahl an Kulturpflanzen. Unter dem Begriff "Bereitstellen eines Pflanzenwachstumsmodells" soll sowohl verstanden werden, dass auf ein existierendes Modell zurückgegriffen wird, als auch, dass ein existierendes Modell angepasst oder verändert wird, als auch, dass ein neues Modell aufgesetzt wird.

Eine Einführung in die Erstellung von Pflanzenwachstumsmodellen bieten beispielsweise die Bücher i) "Mathematische Modellbildung und Simulation" von Marco Günther und Kai Velten, erschienen im Wiley-VCH Verlag im Oktober 2014 (ISBN: 978-3-527-41217-4), sowie ii) "Workingwith DynamicCrop Models" von Daniel Wallach, David Makowski, James W. Jones und Francois Brun., erschienen 2014 in Academic Press (Elsevier), USA.

Das Pflanzenwachstumsmodell simuliert üblicherweise das Wachstum eines Bestands an Kulturpflanzen über einen definierten Zeitraum. Denkbar ist auch, ein Modell auf Basis einer einzelnen Pflanze zu verwenden, das die Energie- und Stoffflüsse in den einzelnen Organen der Pflanze simuliert. Es sind zudem Mischmodelle verwendbar.

Das Wachstum einer Kulturpflanze wird neben den genetischen Merkmalen der Pflanze vornehmlich durch die über die Lebensdauer der Pflanze herrschenden lokalen Witterungen (Quantität und spektrale Verteilung der einfallenden Sonnenstrahlen, Temperaturverläufe, Niederschlagsmengen, Windeintrag), dem Zustand des Bodens sowie das Nährstoffangebot bestimmt.

Auch die bereits erfolgten Kulturmaßnahmen und ein etwaig aufgetretener Befall mit Schadorganismen können einen Einfluss auf das Pflanzenwachstum ausüben und können in dem Wachstumsmodell berücksichtigt werden.

Die Pflanzenwachstumsmodelle sind i.d.R. sogenannte dynamische prozessbasierte Modelle (s. "Working with Dynamic Crop Models" von Daniel Wallach, David Makowski, James W. Jones und Francois Brun., erschienen 2014 in Academic Press (Elsevier), USA), können aber auch gänzlich oder teilweise regelbasiert oder statistisch bzw. datengestützt/empirisch sein. Die Modelle sind i.d.R. sogenannte Punktmodelle. Hierbei werden die Modelle i.d.R. so kalibriert, dass der Output die räumliche Repräsentanz des Inputs wiederspiegelt. Ist der Input an einem Punkt im Raum erhoben oder wird für einen Punkt im Raum interpoliert oder geschätzt, so wird i.d.R. angenommen, dass der Modelloutput für das gesamte angrenzende Feld gültig ist. Eine Anwendung von auf Feldebene kalibrierten sog. Punktmodellen auf weitere, i.d.R. gröbere Skalen ist bekannt (siehe z.B. H. Hoffmann et al.: Impact of spatial soil and climate input data aggregation on regional yield simulations., 2016, PLoS ONE 11(4): e0151782. doi:10.1371/journal.pone.0151782). Eine Anwendung dieser sog. Punktmodelle auf mehrere Punkte innerhalb eines Feldes ermöglicht hierbei eine teilflächenspezifische Modellierung. Hierbei werden allerdings räumliche Abhängigkeiten vernachlässigt, z.B. im Bodenwasserhaushalt. Andererseits existieren auch Systeme zur zeitlich-räumlich expliziten Modellierung. Hierbei werden räumliche Abhängigkeiten berücksichtigt.

Beispiele für dynamische, prozessbasierte Pflanzenwachstumsmodelle sind *Apsim, Lintul, Epic, Hermes, Monica, STICS* u.a.

in die Modellierung fließen vorzugsweise folgende Parameter ein (Input):
a) Wetter: tägliche Niederschlagssummen, Strahlungssummen, Tagesminimum und - maximum der Lufttemperatur sowie Temperatur in Bodennähe sowie Bodentemperatur, Windgeschwindigkeit, u.a.
b) Boden: Bodentyp, Bodentextur, Bodenart, Feldkapazität, Permanenter Welkepunkt, Organischer Kohlenstoff, mineralischer Stickstoffgehalt, Lagerungsdichte, Van-Genuchten-Parameter, u.a.
c) Kulturpflanze: Art, Sorte, sortenspezifische Parameter wie z.B. Spezifischer Blattflächenindex, Temperatursummen, maximale Wurzeltiefe, u.a.
d) Kulturmaßnahmen: Saatgut, Aussaattermin, Aussaatdichte, Aussaattiefe, Düngemittel, Düngemenge, Anzahl an Düngeterminen, Düngetermin, Bodenbearbeitung, Ernterückstände, Fruchtfolge, Distanz zum Feld gleicher Kultur im Vorjahr, Bewässerung, u.a.

Nachfolgend wird die Erfindung anhand von Beispielen und Abbildungen näher beschrieben, ohne die Erfindung jedoch auf die in den Beispielen genannten Merkmale bzw. Kombinationen von Merkmalen reduzieren zu wollen.

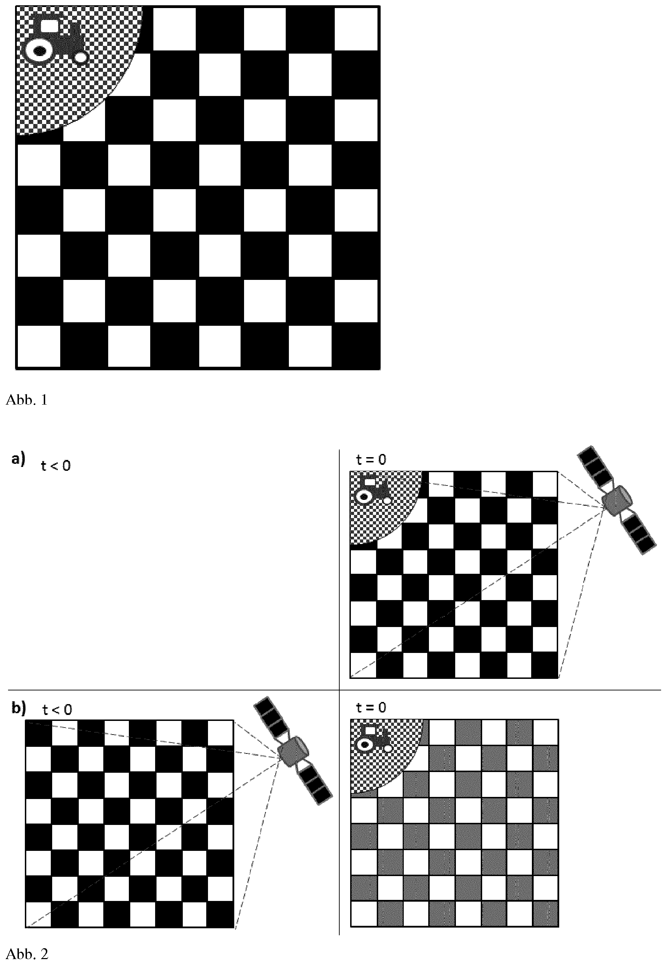

Die Abbildungen 1 und 2 dienen zur Verdeutlichung der vorliegenden Erfindung.

Abbildung 1 zeigt schematisch eine Bildaufnahme eines Feldes für Kulturpflanzen. Das große Quadrat mit dem Schachbrettmuster stellt das Feld dar. Das Schachbrettmuster verdeutlicht die räumliche Auflösung der Bildaufnahme. Sie wird maßgeblich durch das Auflösungsvermögen des verwendeten Fernerkundungssensors bestimmt.

In der linken oberen Ecke des Feldes ist eine Applikationsvorrichtung in Form eines Traktors dargestellt. Der Traktor ist gemäß einer nicht beanspruchten Ausführungsform, die hilfreich ist zum Verständnis der Erfindung mit einem Feldsensor ausgestattet (in der Abbildung ist kein Feldsensor dargestellt). Der Feldsensor hat ein höheres Auflösungsvermögen als der zur Erzeugung der Bildaufnahme verwendete Fernerkundungssensor (erkennbar an dem "kleineren" Schachbrettmuster). Dafür ist die Reichweite des Feldsensors auf die Umgebung der Applikationsvorrichtung beschränkt. Durch Kombination der Informationen, die vom Fernerkundungssensor und vom Feldsensor stammen, lässt sich eine landwirtschaftliche Maßnahme teilflächenspezifisch planen und ausführen.

Die Abbildung 1 soll jedoch nicht so verstanden werden, dass Fernerkundungssensor und Feldsensor den gleichen Parameter nur in unterschiedlicher Auflösung erfassen. Wie bereits an verschiedenen Stellen des vorliegenden Textes angeführt, können vom Fernerkundungssensor und Feldsensor jeweils unterschiedliche Parameter erfasst werden, z.B. kann mittels Fernerkundungssensor anhand eines ersten Parameters der Bedarf an einer Behandlung des Feldes mit einem Pflanzenschutzmittel erkannt werden, während mittels des Feldsensors anhand eines zweiten Parameters die lokalen aktuellen Bedarfsmengen ermittelt werden. Der Fernerkundungssensor erfasst dabei das gesamte Feld, der Feldsensor nur einen lokalen Bereich.

Abbildung 2 zeigt schematisch eine Bildaufnahme eines Feldes für Kulturpflanzen zu unterschiedlichen Zeitpunkten t=0 und t<0 für zwei Szenarien a) und b).

Szenario a) betrifft den Fall, das für einen aktuellen Zeitpunkt (t=0) eine Satellitenaufnahme des Feldes verfügbar ist. Wie bereits in Bezug auf Abbildung 1 erläutert, weist die Bildaufnahme, die vom Satelliten stammt, eine geringere räumliche Auflösung auf (schwarz-weißes Schachbrettmuster im großen Quadrat) als ein Bereich (linke obere Ecke), der von einem Feldsensor (nicht gezeigt), der gemäß einer nicht beanspruchten Ausführungsform, die hilfreich ist zum Verständnis der Erfindung an einem Traktor befestigt ist, erfasst wird. Da für den aktuellen Zeitpunkt (t=0) Informationen über den Zustand des Feldes vorliegen, können diese Informationen erfindungsgemäß verknüpft werden und es kann somit eine landwirtschaftliche Maßnahme teilflächenspezifisch geplant und ausgeführt werden.

Es sei darauf hingewiesen, dass es sich bei dem Zeitpunkt t=0 nicht wirklich um einen Punkt im mathematischen Sinne handelt. Vielmehr ist ein Zeitraum gemeint, der vor dem Zeitraum beginnt, in dem die landwirtschaftliche Maßnahme ausgeführt wird. Der "Zeitraum t=0" kann den Zeitraum der landwirtschaftlichen Maßnahme ganz oder teilweise umfassen oder vorher enden. Entscheidend ist, dass sich innerhalb dieses "Zeitraums t=0" die Parameter, die mit dem Fernerkundungssensor erfasst werden, nicht in signifikantem Ausmaß ändern. Es ist denkbar, dass die Daten, die vom Fernerkundungssensor zur Verfügung gestellt werden, eine Woche oder mehrere Tage oder einen Tag oder mehrere Stunden oder eine Stunde vor dem Beginn der landwirtschaftlichen Maßnahme erzeugt werden.

Szenario b) betrifft den Fall, dass für einen aktuellen Zeitpunkt (t=0) keine Satellitenaufnahme für das Feld verfügbar ist. Um dennoch eine landwirtschaftliche Maßnahme erfindungsgemäß planen und ausführen zu können, wird daher eine Satellitenaufnahme, die zu einem früheren Zeitpunkt (t<0) erzeugt worden ist, verwendet. Zwischen dem Zeitpunkt t<0 und t=0 ist so viel Zeit vergangen, dass sich das Feld verändert hat. Die vom Fernerkundungssensor erfassten Parameter zum Zeitpunkt t<0 weisen deutliche Unterschiede zu Parametern auf, die zum Zeitpunkt t=0 erfasst werden würden. Mit Hilfe eines Vorhersagemodells (z.B. eines Pflanzenwachstumsmodells) wird aus dem Zustand des Feldes zum Zeitpunkt t<0 der Zustand zum Zeitpunkt t=0 berechnet, so dass die Informationen, die zur Planung einer landwirtschaftlichen Maßnahme nötig sind, in der räumlichen Auflösung der früheren Satellitenaufnahme vorliegen (dargestellt durch ein graues Schachbrettmuster).

In einer bevorzugten Ausführungsform der vorliegenden Erfindung ist in dem Feld für Kulturpflanzen ein Befall mit Schadorganismen beobachtet worden. Um eine Verbreitung der Schadorganismen zu verhindern, soll das gesamte Feld mit einem Pflanzenschutzmittel zur Bekämpfung der Schadorganismen behandelt werden. Die zu applizierenden Mengen an Pflanzenschutzmittel sollen an die jeweiligen Größen der Blattfläche der Kulturpflanzen angepasst werden.

Es wird mit einem ersten Computersystem eine digitale Bildaufnahme von dem Feld von einem entsprechenden Anbieter empfangen. Bei der digitalen Bildaufnahme handelt es sich um eine Satellitenaufnahme, aus der für jedes Pixel der Satellitenaufnahme ein Blattflächenindex berechnet wird.

Es wird ein Pflanzenschutzmittel ausgewählt, für das bekannt ist, dass es die Schadorganismen effektiv bekämpft.

Die berechneten Blattflächenindizes werden verwendet, um für jedes Pixel der digitalen Bildaufnahme die jeweils optimale Menge an Pflanzenschutzmittel zu berechnen. Hierzu können Herstellerangaben verwendet werden, die Auskunft darüber geben können, welche Menge an Pflanzenschutzmittel pro Flächeneinheit an vorhandener Blattfläche einzusetzen ist. Die für die einzelnen Pixel berechneten Bedarfsmengen stellen eine Applikationskarte dar.

Darüber hinaus wird die Bedarfsgesamtmenge an Pflanzenschutzmittel berechnet, um diese Menge in einem nächsten Schritt bereitzustellen.

Es wird ein Zeitraum geplant, an dem das Pflanzenschutzmittel appliziert werden soll. Wetterdaten und -vorhersagen werden verwendet, um einen Zeitraum zu identifizieren, der in naher Zukunft liegt ist (um eine weitere Ausbreitung der Schadorganismen und damit Schädigung der Kulturpflanzen zu verhindern), in dem es jedoch keine Niederschläge geben sollte und an den sich ein Zeitraum vom mindestens einem Tag anschließt, in dem ebenfalls keine Niederschläge auftreten sollten, damit das Pflanzenschutzmittel seine Wirkung entfalten kann, ohne dass es vorher abgewaschen wird.

Wenn der Zeitraum für die geplante landwirtschaftliche Maßnahme erreicht ist, wird eine mobile Applikationsvorrichtung mit dem Pflanzschutzmittel auf den Weg durch das Feld geschickt. Die Applikationsvorrichtung ist gemäß einer nicht beanspruchten Ausführungsform, die hilfreich ist zum Verständnis der Erfindung mit einem Feldsensor ausgestattet, der die unmittelbare Umgebung vor der Applikationsvorrichtung (in Fahrtrichtung) erfasst, um die lokale Blattgröße zu ermitteln. Die jeweils abgegebenen Mengen an Pflanzenschutzmittel werden an die lokal erfassten Blattgrößen angepasst.

In einer weiteren bevorzugten Ausführungsform sollen die in einem Feld angebauten Kulturpflanzen mit Nährstoffen versorgt werden. Es sollen nur diejenigen Kulturpflanzen versorgt werden, die eine bestimmte Wachstumsschwelle erreicht oder überschritten haben. Für Kulturpflanzen, deren Wachstumsstadium unterhalb des Schwellenwerts liegt, lohnt sich eine Versorgung mit Nährstoffen nicht.

Es wird eine digitale Bildaufnahme in Form einer Satellitenaufnahme empfangen, aus der ein Vegetationsindex für jedes einzelne Pixel berechnet wird.

Die Vegetationsindizes werden verwendet, um für jedes Pixel zu ermitteln, ob die Wachstumsschwelle erreicht, überschritten oder unterschritten ist.

Es wird die Menge an Nährstoffen berechnet, die notwendig ist, um die Pflanzen, die die Wachstumsschwelle erreicht oder überschritten haben, zu versorgen.

Anhand der Verteilung der zu versorgenden Pflanzen wird eine kürzeste Route für eine Applikationsvorrichtung berechnet, um Nährstoffe auszubringen und ggf. zwischenzeitlich Nachschub zu besorgen.

Die erforderliche Menge an Nährstoffen wird bereitgestellt, in eine Applikationsvorrichtung geladen, die gemäß einer nicht beanspruchten Ausführungsform, die hilfreich ist zum Verständnis der Erfindung mit einem Feldsensor ausgestattet ist. Während sich die Applikationsvorrichtung durch das Feld bewegt, erfasst der Feldsensor lokal einen Vegetationsindex, um lokal zu bestimmen, welche Kulturpflanzen eine Wachstumsschwelle erreicht oder überschritten haben. Die identifizierten Kulturpflanzen werden mit Nährstoffen versorgt. Diejenigen Kulturpflanzen, die die Wachstumsschwelle nicht überschritten haben, werden nicht mit Nährstoffen versorgt.

## Patentansprüche

1. Verfahren, umfassend die Schritte:
- Empfangen mindestens einer digitalen Bildaufnahme von einem Feld für Kulturpflanzen, wobei die mindestens eine digitale Bildaufnahme mit Hilfe eines oder mehrerer Fernerkundungssensoren erzeugt worden ist,
- Planen einer teilflächenspezifischen landwirtschaftlichen Maßnahme in dem Feld auf Basis der digitalen Bildaufnahme des Feldes und Bereitstellen von Mitteln zur teilflächenspezifischen Ausführung der Maßnahme, **dadurch gekennzeichnet, dass** das Verfahren die folgenden Schritte aufweist:
- Ausführen der Maßnahme, wobei während der Ausführung der Maßnahme mittels eines oder mehrerer Sensoren ein oder mehrere aktuelle lokale Parameter über das Feld erfasst werden und die Ausführung der Maßnahme fortwährend an den/die aktuellen lokalen Parameter angepasst wird,
- wobei der/die Sensor/en einen Bereich in der Umgebung der Vorrichtung zur Ausführung der landwirtschaftlichen Maßnahme (Applikationsvorrichtung) erfasst/erfassen und sich unabhängig von der Applikationsvorrichtung durch das Feld und/oder über das Feld bewegt/bewegen.

2. Verfahren nach Anspruch 1, wobei das Planen der teilflächenspezifischen landwirtschaftlichen Maßnahme die folgenden Schritte umfasst:
- Ermitteln eines Bedarfs zumindest eines Teils des Feldes und/oder der angebauten Kulturpflanzen an einer oder an mehreren landwirtschaftlichen Maßnahmen ausgewählt aus der Liste: Bearbeitung des Bodens, Ausbringung von Saatgut, Behandlung mit einem oder mehreren Pflanzenschutzmitteln, Ausbringung von Nährstoffen, Bewässerung,
- Ermitteln der erforderlichen Gesamtmenge zur Befriedigung des ermittelten Bedarfs, wobei die Gesamtmenge auf Basis der mindestens einen digitalen Bildaufnahme ermittelt wird,
- Bereitstellen der Mittel zur Ausführung der landwirtschaftlichen Maßnahme auf Basis der ermittelten Gesamtmenge.

3. Verfahren nach Anspruch 2, wobei das Planen der teilflächenspezifischen landwirtschaftlichen Maßnahme ferner den folgenden Schritt umfasst:
- Ermitteln teilflächenspezifischer Bedarfsmengen zur Befriedigung des ermittelten Bedarfs.

4. Verfahren nach Anspruch 2 oder 3, wobei das Planen der teilflächenspezifischen landwirtschaftlichen Maßnahme ferner den folgenden Schritt umfasst:
- Festlegen der Route einer oder mehrerer Vorrichtungen durch oder über das Feld zur Ausführung der landwirtschaftlichen Maßnahme auf Basis der ermittelten Gesamtmenge und/oder der teilflächenspezifischen Bedarfsmengen.

5. Verfahren nach einem der Ansprüche 1 bis 4, **dadurch gekennzeichnet, dass** es sich bei der digitalen Bildaufnahme um eine Satellitenaufnahme handelt.

6. Verfahren nach einem der Ansprüche 2 bis 5, **dadurch gekennzeichnet, dass** in dem Feld ein Schädlingsbefall festgestellt worden ist oder ein Schädlingsbefall droht und damit ein Bedarf an der Behandlung mit einem Pflanzenschutzmittel vorliegt.

7. Verfahren nach einem der Ansprüche 2 bis 5, **dadurch gekennzeichnet, dass** in dem Feld ein Nährstoffdefizit festgestellt worden ist oder ein Nährstoffdefizit vorausgesagt worden ist und damit ein Bedarf an der Behandlung mit einem oder mehreren Nährstoffen vorliegt.

8. Verfahren nach einem der Ansprüche 2 bis 5, **dadurch gekennzeichnet, dass** in dem Feld ein Bedarf an der Ausbreitung von Saatgut vorliegt.

9. Verfahren nach einem der Ansprüche 3 bis 8, **dadurch gekennzeichnet, dass** die teilflächenspezifische Bedarfsmenge von der Menge der im Feld vorliegenden Biomasse abhängig ist, die vorzugsweise aus einem Vegetationsindex aus der mindestens einen digitalen Bildaufnahme abgeleitet wird.

10. Verfahren nach einem der Ansprüche 3 bis 8, **dadurch gekennzeichnet, dass** die teilflächenspezifische Bedarfsmenge von der Größe der vorliegenden Blattflächen abhängig ist, die vorzugsweise aus einem Blattflächenindex aus der mindestens einen digitalen Bildaufnahme abgeleitet wird.

11. Verfahren nach einem der Ansprüche 3 bis 10, **dadurch gekennzeichnet, dass** auf Basis der teilflächenspezifischen Bedarfsmengen eine digitale Applikationskarte erstellt wird, die bei der Ausführung der landwirtschaftlichen Maßnahme anhand der lokalen Parameter aktualisiert und/oder verfeinert wird.

12. Verfahren nach einem der Ansprüche 1 bis 11, **dadurch gekennzeichnet, dass** die mindestens eine digitale Bildaufnahme des Feldes verwendet wird, um den Zustand des Feldes für den Zeitraum der geplanten landwirtschaftlichen Maßnahme vorherzusagen, wobei der vorhergesagte Zustand verwendet wird, um die landwirtschaftliche Maßnahme zu planen.

13. System umfassend:
ein erstes Computersystem, das so eingerichtet ist,
dass es mindestens eine digitale Bildaufnahme eines Feldes für Kulturpflanzen empfängt, wobei die mindestens eine digitale Bildaufnahme mit Hilfe eines oder mehrerer Fernerkundungssensoren erzeugt worden ist, und
dass es einen Nutzer unterstützt, auf Basis der digitalen Bildaufnahme des Feldes eine teilflächenspezifische landwirtschaftliche Maßnahme in dem Feld zu planen, wobei das Computersystem dazu eingerichtet ist, Mittel zu ermitteln, die zur teilflächenspezifischen Ausführung der Maßnahme bereitgestellt werden müssen,
das System ferner umfassend mindestens eine Applikationsvorrichtung zur Ausführung der landwirtschaftlichen Maßnahme, die so eingerichtet ist, dass sie sich durch und/oder über das Feld bewegt und dabei aktuelle lokale Bedarfsmengen appliziert,
**dadurch gekennzeichnet, dass** das System ein zweites Computersystem umfasst, das so eingerichtet ist,
dass es den aktuellen lokalen Zustand des Feldes bei der Ausführung der Maßnahme mittels eines oder mehrerer Sensoren erfasst und die Ausführung der Maßnahme an den aktuellen lokalen Zustand anpasst,
und dass das System ferner den oder die mehreren Sensoren umfasst,
wobei der/die Sensor/en eingerichtet sind einen Bereich in der Umgebung der Applikationsvorrichtung zu erfassen und sich unabhängig von der Applikationsvorrichtung durch das Feld und/oder über das Feld zu bewegen.

## Claims

1. A method comprising the steps of:
- receiving at least one digital image of a field for crop plants, wherein the at least one digital image has been generated by means of one or a plurality of remote sensors,
- planning a partial-area-specific agricultural measure in the field based on the digital image of the field and providing means for partial-area-specific implementation of the measure, wherein the method comprises the following steps:
- carrying out the measure, wherein, during the implementation of the measure by means of one or a plurality of sensors, one or a plurality of current local parameters is/are recorded over the field, and implementation of the measure is continuously adapted to the current local parameter(s),
- wherein the sensor(s) detect(s) a region in the environment of the apparatus for implementing the agricultural measure (application device) and move(s) through the field and/or over the field independently from the application device.

2. The method according to claim 1, wherein planning of the partial-area-specific agricultural measure comprises the following steps:
- determining a requirement of at least a portion of the field and/or the cultivated crop plants for one or a plurality of agricultural measures selected from the following list: cultivating the soil, application of seeds, treatment with one or a plurality of plant protection agents, application of nutrients, and watering,
- determining the total amount required to meet the determined requirement, wherein the total amount is determined based on the at least one digital image, and
- providing the means for implementation of the agricultural measure based on the total amount determined.

3. The method according to claim 2, wherein planning of the partial-area-specific agricultural measure further comprises the following step:
- determining the partial-area-specific amounts required to meet the determined requirement.

4. The method according to claim 2 or 3, wherein planning of the partial-area-specific agricultural measure further comprises the following step:
- specifying the route of one or a plurality of apparatuses through or over the field for implementing the agricultural measure based on the total amount determined and/or the partial-area-specific required amounts.

5. The method according to one of claims 1 to 4, wherein the digital image is a satellite image.

6. The method according to one of claims 2 to 5, wherein a pest infestation has been detected or a pest infestation is imminent in the field, and there is therefore a requirement for treatment with a plant protection agent.

7. The method according to one of claims 2 to 5, wherein a nutrient deficit has been detected or a nutrient deficit has been predicted in the field, and there is therefore a requirement for treatment with one or a plurality of nutrients.

8. The method according to one of claims 2 to 5, wherein there is a requirement for spreading seeds in the field.

9. The method according to one of claims 3 to 8, wherein the partial-area-specific required amount depends on the amount of biomass present in the field, which is preferably derived from a vegetation index from the at least one digital image.

10. The method according to one of claims 3 to 8, wherein the partial-area-specific required amount depends on the size of the leaf areas present, which is preferably derived from a leaf area index from the at least one digital image.

11. The method according to one of claims 3 to 10, wherein, based on the partial-area-specific required amounts, a digital application map is prepared, which is updated and/or refined using the local parameters in implementing the agricultural measure.

12. The method according to one of claims 1 to 11, wherein the at least one digital image of the field is used to predict the state of the field for the period of the planned agricultural measure, wherein the predicted state is used to plan the agricultural measure.

13. A system comprising:
a first computer system, configured such that it receives at least one digital image of a field for crop plants, wherein the at least one digital image has been generated using one or a plurality of remote sensors, and
it supports a user, based on the digital image of the field, in planning a partial-area-specific agricultural measure in the field, wherein the computer system is configured to determine means that must be provided for the partial-area-specific implementation of the measure,
the system further comprising at least one application device for implementing the agricultural measure which is configured such that it moves through and/or over the field while applying current local required amounts,
wherein the system comprises a second computer system, configured such that
it determines the current local state of the field in implementation of the measure by means of one or a plurality of sensors and adapts implementation of the measure to the current local state,
and wherein the system further comprises one or more sensors,
wherein the sensor(s) is/are configured to detect a region in the environment of the application device and to move through the field and/or over the field independently from the application device.

## Revendications

1. Procédé comprenant les étapes suivantes consistant à :
- recevoir au moins une capture d'image numérique d'un champ de plantes cultivées, dans lequel ladite au moins une capture d'image numérique a été générée à l'aide d'un ou de plusieurs capteurs de télésondage,
- planifier une mesure agricole, spécifique à une parcelle, dans le champ sur la base de la capture d'image numérique du champ, et fournir des moyens pour exécuter la mesure de manière spécifique à une parcelle,
**caractérisé en ce que** le procédé comprend les étapes suivantes consistant à :
- exécuter la mesure, dans lequel, pendant l'exécution de la mesure au moyen d'un ou de plusieurs capteurs, un ou plusieurs paramètres locaux actuels concernant le champ sont détectés, et l'exécution de la mesure est en continu adaptée au(x) paramètre(s) local/locaux actuel(s),
- dans lequel le(s) capteur(s) détecte(nt) une zone dans l'environnement du dispositif pour exécuter la mesure agricole (dispositif d'application) et se déplace(nt) à travers le champ et/ou sur le champ indépendamment du dispositif d'application.

2. Procédé selon la revendication 1, dans lequel la planification de la mesure agricole spécifique à une parcelle comprend les étapes suivantes consistant à :
- déterminer un besoin d'au moins une partie du champ et/ou des plantes cultivées en place quant à une ou plusieurs mesures agricoles sélectionnées dans la liste comprenant : la culture du sol, l'épandage de semences, le traitement avec un ou plusieurs produits phytosanitaires, l'épandage de nutriments, l'irrigation,
- déterminer la quantité totale requise pour satisfaire au besoin déterminé, la quantité totale étant déterminée sur la base d'au moins une capture d'image numérique,
- fournir des moyens pour exécuter la mesure agricole sur la base de la quantité totale déterminée.

3. Procédé selon la revendication 2, dans lequel la planification de la mesure agricole spécifique à une parcelle comprend en outre l'étape suivante consistant à :
- déterminer des quantités requises spécifiques à une parcelle pour satisfaire au besoin déterminé.

4. Procédé selon la revendication 2 ou 3, dans lequel la planification de la mesure agricole spécifique à une parcelle comprend en outre l'étape suivante consistant à :
- spécifier l'itinéraire d'un ou de plusieurs dispositifs à travers ou sur le champ pour exécuter la mesure agricole sur la base de la quantité totale déterminée et/ou des quantités requises spécifiques à une parcelle.

5. Procédé selon l'une quelconque des revendications 1 à 4, **caractérisé en ce que** la capture d'image numérique est une capture satellitaire.

6. Procédé selon l'une quelconque des revendications 2 à 5, **caractérisé en ce qu'**une infestation parasitaire a été constatée dans le champ, ou une infestation parasitaire est imminente, et un traitement avec un produit phytosanitaire est donc nécessaire.

7. Procédé selon l'une quelconque des revendications 2 à 5, **caractérisé en ce qu'**un déficit en nutriments a été constaté dans le champ, ou un déficit en nutriments a été prédit, et un traitement avec un ou plusieurs nutriments est donc nécessaire.

8. Procédé selon l'une quelconque des revendications 2 à 5, **caractérisé en ce qu'**un épandage de semence dans le champ est nécessaire.

9. Procédé selon l'une quelconque des revendications 3 à 8, **caractérisé en ce que** la quantité requise spécifique à une parcelle dépend de la quantité de biomasse présente dans le champ, qui est de préférence dérivée d'un indice de végétation de ladite au moins une capture d'image numérique.

10. Procédé selon l'une quelconque des revendications 3 à 8, **caractérisé en ce que** la quantité requise spécifique à une parcelle dépend de la taille des surfaces foliaires présentes, qui est de préférence dérivée d'un indice de surface foliaire de ladite au moins une capture d'image numérique.

11. Procédé selon l'une quelconque des revendications 3 à 10, **caractérisé en ce qu'**une carte d'application numérique est créée sur la base des quantités requises spécifiques à une parcelle, laquelle carte est actualisée et/ou affinée à l'aide des paramètres locaux lorsque la mesure agricole est exécutée.

12. Procédé selon l'une quelconque des revendications 1 à 11, **caractérisé en ce que** ladite au moins une capture d'image numérique du champ est utilisée pour prédire l'état du champ pour la période de la mesure agricole planifiée, l'état prédit étant utilisé pour planifier la mesure agricole.

13. Système, comprenant :
un premier système informatique qui est conçu pour
recevoir au moins une capture d'image numérique d'un champ de plantes cultivées, dans lequel ladite au moins une capture d'image numérique a été générée à l'aide d'un ou de plusieurs capteurs de télésondage, et
assister un utilisateur à planifier une mesure agricole, spécifique à une parcelle, dans le champ sur la base de la capture d'image numérique du champ, dans lequel le système informatique est conçu pour déterminer des moyens qui sont à fournir pour exécuter la mesure de manière spécifique à une parcelle,
le système comprenant en outre au moins un dispositif d'application pour exécuter la mesure agricole, qui est conçu pour se déplacer à travers et/ou sur le champ tout en appliquant des quantités requises locales actuelles,
**caractérisé en ce que** le système comprend un deuxième système informatique qui est conçu pour
détecter l'état local actuel du champ lors de l'exécution de la mesure au moyen d'un ou de plusieurs capteurs et pour adapter l'exécution de la mesure à l'état local actuel,
et **en ce que** le système comprend en outre ledit ou lesdits capteurs,
dans lequel le(s) capteur(s) est/sont conçu(s) pour détecter une zone dans l'environnement du dispositif d'application et pour se déplacer à travers le champ et/ou sur le champ indépendamment du dispositif d'application.
